# FASCICULE DE BREVET EUROPEEN

(11) **EP 0 937 907 B1**
(45) Date de publication et mention de la délivrance du brevet: **23.07.2003**
(21) Numéro de dépôt: 99400417.4
(22) Date de dépôt: 22.02.1999
(51) Int. Cl.: F16F 1/38

(54) **Dispositif de liaison, à une pièce extérieure, d'un noyau d'armature intérieure d'une articulation élastique**
Vorrichtung zum Verbinden des Ankerkerns eines elastischen Gelenks mit einem Aussenteil
Device to connect to an external element the core of the internal sleeve of an elastic joint

(30) Priorité: 24.02.1998 FR 9802189
(43) Date de publication de la demande: 25.08.1999
(73) Titulaire: HUTCHINSON, 75008 Paris (FR)
(72) Inventeur: Girard, André, 18500 Mehun sur Yevre (FR); Labbe, Jean Claude, 18500 Foecy (FR); Leroy, Jean-Francois, 18100 Vierzon (FR)
(74) Mandataire: Burbaud, Eric

(56) Documents cités:
- DE-B- 1 054 849
- DE-U- 8 129 047
- FR-A- 2 675 231
- US-A- 1 779 663
- US-A- 1 783 801
- US-A- 4 078 276

## Description

La présente invention concerne un dispositif de liaison, à une pièce extérieure, d'un noyau d'armature intérieure d'une articulation élastique, ce noyau étant par ailleurs relié à une armature extérieure par une masse de matière élastique.

Il pourra s'agir par exemple, si l'on se situe dans le domaine de l'automobile, d'un dispositif d'articulation élastique de liaison d'un triangle de suspension avant au berceau du véhicule.

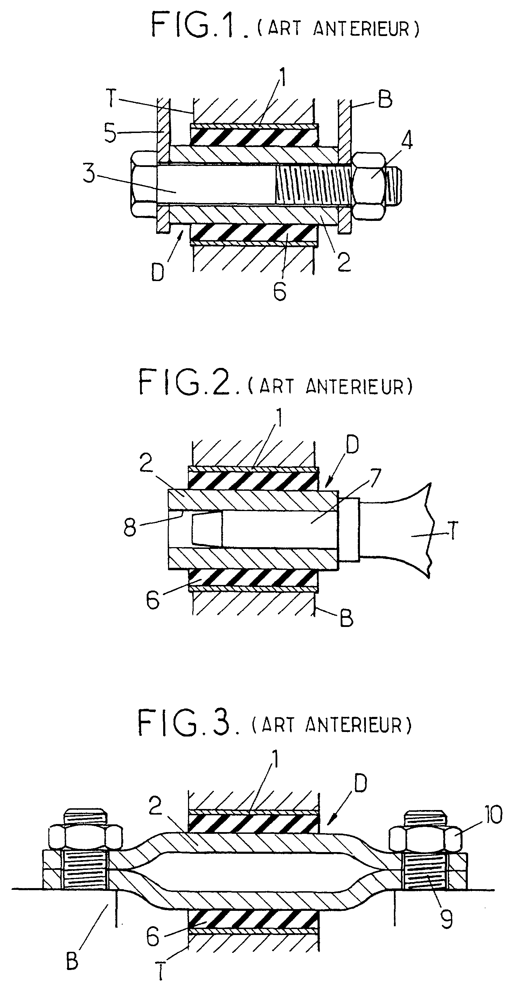

Aux figures 1 à 3 des dessins ci-annexés, on a montré en coupe axiale, selon l'axe de l'articulation, différents dispositifs connus. Dans ces figures, le dispositif d'articulation D est destiné à assurer la liaison élastique entre un triangle T et un berceau B du véhicule (ou une pièce qui en est solidaire), triangle et berceau n'étant représentés que partiellement.

Dans la figure 1, l'armature extérieure 1 du dispositif d'articulation D est montée à ajustement serré dans un logement correspondant du triangle T, le dispositif comprenant, en tant qu'armature intérieure 2, un tube traversé d'un boulon 3 dont l'écrou d'extrémité 4 permet le serrage entre les branches d'une chape 5 du berceau, un manchon 6 d'élastomère étant adhérisé entre les deux armatures.

Dans la figure 2, où les mêmes références désignent les mêmes pièces, l'armature extérieure 1 est montée de la même manière qu'à la figure 1, par ajustement serré dans un logement du berceau B ; un axe 7 du triangle T est monté en porte-à-faux, par ajustement serré dans l'alésage 8 du tube 2.

Dans la figure 3, l'armature extérieure 1 est encore montée par emmanchement serré dans un logement correspondant du triangle T, et l'armature intérieure 2 est constituée d'un tube dont les extrémités, extérieures au manchon 6, sont écrasées et percées de trous permettant leur fixation sur le berceau par l'intermédiaire de goujons 9 et d'écrous 10.

Lorsque l'armature intérieure 2 est réalisée par frappe à froid et usinage, la fabrication est coûteuse et le moulage du manchon d'élastomère est plus compliqué.

Lorsque l'armature intérieure 2 est réalisée à partir d'un tube dont les extrémités sont écrasées et poinçonnées après moulage du caoutchouc, on limite le choix des diamètres et épaisseurs du tube intérieur.

Le but de la présente invention est de remédier à ces différens inconvénients de la technique antérieure, et de faire en sorte, pour la facilité de fabrication, que les moyens de fixation de l'armature intérieure (trous ou analogues) puissent être constitués sur des pièces distinctes de cette armature, ajustables sur cette dernière.

A cet effet, un dispositif du type général défini au début est, conformément à la présente invention, caractérisé en ce que ledit noyau est constitué d'un tube épais comportant centralement une ouverture traversante, rectangulaire et étroite, et en ce que ledit dispositif comporte deux lames de liaison présentant chacune :
- un corps de largeur constante propre à s'engager avec ajustement serré, suivant cette largeur, dans ladite ouverture du noyau, selon le grand côté de la section rectangulaire de cette ouverture ;
- une tête d'extrémité sensiblement plus large que ledit corps et propre à s'appuyer contre l'extrémité correspondante dudit noyau quand le corps est engagé dans ladite ouverture rectangulaire de ce noyau, ladite lame dépassant alors à son autre extrémité ; et
- un trou de fixation à proximité de chacune des deux extrémités de la lame, à savoir l'un dans sa tête et l'autre vers l'extrémité opposée, le trou de tête d'une des lames se superposant au trou de ladite extrémité opposée de l'autre lame lorsque ces deux lames sont engagées en étant superposées tête-bêche dans ladite ouverture rectangulaire du noyau.

Ainsi on pourra engager dans l'ouverture rectangulaire du noyau les deux lames de liaison usinées aux cotes voulues et percées, ceci après l'opération de moulage de la masse de matière élastique. En outre, la mise en place des deux lames dans le noyau constitue une opération extrêmement simple, et les lames sont très faciles à fabriquer en grandes séries, pouvant toutes être identiques.

Avantageusement et afin de faciliter la mise en place des lames de liaison dans le noyau, on peut encore prévoir que la partie terminale de chaque lame, du côté opposé à la tête, présente une largeur légèrement inférieure à la largeur du corps de la lame, c'est-à-dire légèrement inférieure à la longueur du grand côté de la section rectangulaire de l'ouverture du noyau, ceci sur une longueur légèrement supérieure à la moitié de la longueur dudit noyau.

De la sorte, au début de leur introduction dans l'ouverture traversante du noyau, les deux lames pourront se chevaucher avec jeu avant qu'il soit nécessaire de les presser pour forcer le corps des lames dans cette ouverture.

Avantageusement aussi, sur chaque lame les deux trous de fixation ont des diamètres légèrement différents pour admettre les tolérances d'assemblage.

On peut encore prévoir que ledit noyau comporte axialement un alésage constituant un élargissement central de ladite ouverture rectangulaire, ce qui permettra en cas de besoin d'effectuer avec le même noyau les montages connus décrits plus haut avec référence aux figures 1 et 2.

Un mode d'exécution de l'invention est décrit ci-dessous à titre d'exemple nullement limitatif avec référence aux autres figures du dessin annexé dans lequel :
- la figure 4 représente une articulation élastique conforme à l'invention, avec demi-vue en coupe axiale ;
- la figure 5 représente l'articulation en vue de dessus, qui correspond à la direction du plan des lames de liaison ;

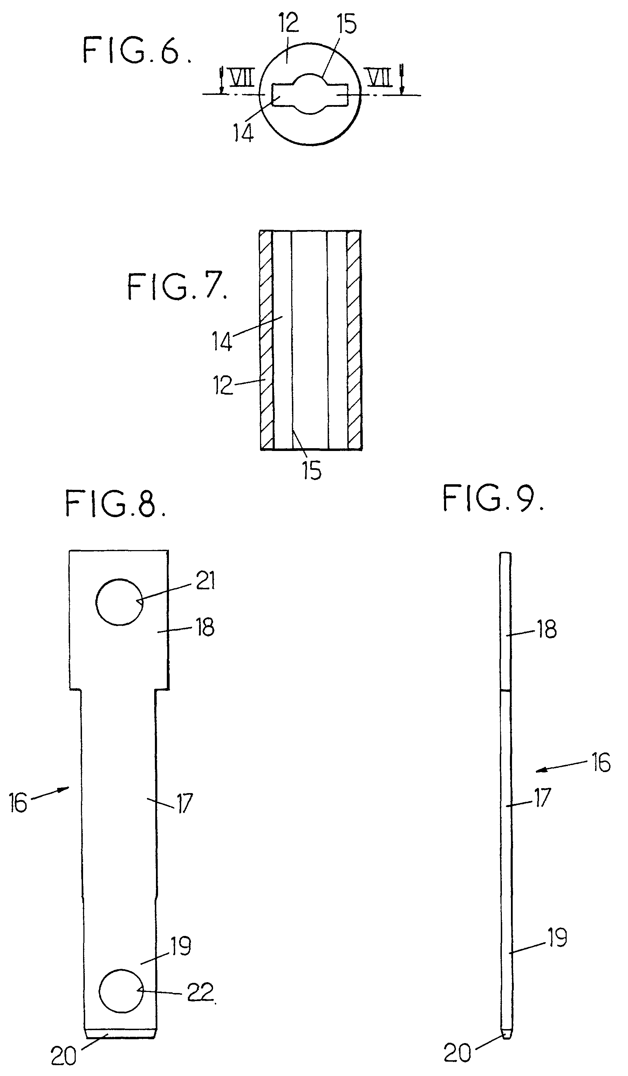

- la figure 6 est une vue en bout du noyau d'armature intérieure ;
- la figure 7 est une vue en coupe axiale du noyau, par la ligne VII-VII de la figure 6 ;
- la figure 8 est une vue en élévation d'une lame de liaison ; et
- la figure 9 est une vue de profil de cette lame de liaison.

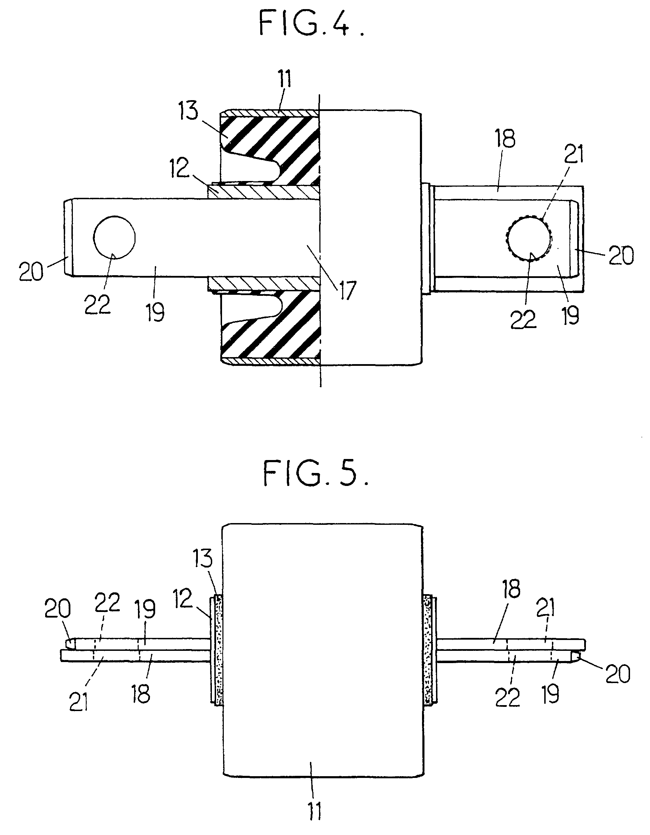

Sur les figures 4 et 5 on a représenté à titre d'exemple une articulation élastique comportant une armature extérieure métallique de forme générale cylindrique 11, et un noyau d'armature intérieure 12, qui peut être également métallique, entre ces deux armatures étant adhérisée une masse de matière élastique en forme de manchon 13, assurant l'élasticité de la liaison articulée entre elles. Il pourra bien entendu s'agir d'un manchon de forme quelconque, et pouvant le cas échéant inclure un système d'amortissement, par exemple à colonne hydraulique.

Le noyau 12 présente la forme d'un tube épais dans lequel on a ménagé axialement une ouverture traversante, rectangulaire et étroite 14, ainsi qu'un alésage traversant 15 constituant un élargissement central de l'ouverture 14.

Les lames de liaison, de préférence identiques, sont référencées généralement en 16 et sont réalisées par exemple en feuillard d'acier doux laminé à froid et écroui. Chaque lame comporte un corps 17 de largeur constante, propre à s'engager avec ajustement serré dans l'ouverture rectangulaire 14 du noyau 12, une tête d'extrémité sensiblement plus large 18 et, à l'extrémité opposée, une partie terminale 19 de largeur légèrement inférieure à la largeur du corps 17, la différence de largeur pouvant être, par exemple, de l'ordre de 1/2 mm. Le bout de la partie terminale 19 est biseauté en 20. La longueur de chaque partie terminale 19 est légèrement supérieure à la moitié de la longueur du noyau 12, pour la raison indiquée plus haut. Les lames 16 comportent aussi, vers leurs extrémités, un trou de fixation 21 dans la tête 18 et un trou de fixation 22 dans la partie terminale 19. Ces trous peuvent être de diamètres légèrement différents, également pour la raison indiquée plus haut, la différence pouvant là encore être de l'ordre de 0,5 mm.

Disposant de deux lames ainsi constituées, il suffit alors de les engager par leurs parties terminales respectives 19 dans les deux extrémités opposées de l'ouverture rectangulaire 14 du noyau 12, ces parties terminales pouvant se chevaucher avec jeu dans cette ouverture du fait de leur longueur, leur mise en butée étant évitée grâce aux bouts biseautés 20. Ensuite on peut les y engager à force et à fond, jusqu'à mise en butée de leurs têtes 18 sur les deux extrémités opposées du noyau 12.

On assure ainsi rapidement et commodément la fixation, sans jeu, des deux lames de liaison 16 superposées en tête-bêche dans le noyau d'armature intérieure 12. Les trous 21 et 22 des deux lames pourront par la suite être utilisés pour assurer, de façon classique, la fixation à la pièce extérieure concernée, de même que l'armature extérieure 11 sera aussi reliée par tout moyen classique à l'autre pièce extérieure concernée, par exemple par emmanchement.

L'alésage 15 du noyau pourra cependant être utilisé sans les lames, pour assurer la liaison du noyau à la pièce correspondante grâce à tout moyen classique tel que boulon, axe, etc., comme selon les figures 1 et 2.

## Revendications

1. Dispositif de liaison, à une pièce extérieure, d'un noyau d'armature intérieure d'une articulation élastique, ce noyau étant par ailleurs relié à une armature extérieure par une masse de matière élastique, **caractérisé en ce que** ledit noyau (12) est constitué d'un tube épais comportant centralement une ouverture traversante (14), rectangulaire et étroite, et **en ce que** ledit dispositif comporte deux lames de liaison (16) présentant chacune :
- un corps (17) de largeur constante propre à s'engager avec ajustement serré, suivant cette largeur, dans ladite ouverture (14) du noyau, selon le grand côté de la section rectangulaire de cette ouverture ;
- une tête d'extrémité (18) sensiblement plus large que ledit corps (17) et propre à s'appuyer contre l'extrémité correspondante dudit noyau (12) quand le corps (17) est engagé dans ladite ouverture rectangulaire (14) de ce noyau, ladite lame (16) dépassant alors à son autre extrémité ; et
- un trou de fixation (21, 22) à proximité de chacune des deux extrémités de la lame, à savoir l'un (21) dans sa tête (18) et l'autre (22) vers l'extrémité opposée, le trou (21) de tête d'une des lames (16) se superposant au trou (22) de ladite extrémité opposée de l'autre lame (16) lorsque ces deux lames sont engagées en étant superposées tête-bêche dans ladite ouverture rectangulaire (14) du noyau.

2. Dispositif selon la revendication 1, **caractérisé en ce que** les deux lames (16) sont identiques.

3. Dispositif selon la revendication 1 ou 2, **caractérisé en ce que** la partie terminale (19) de chaque lame (16), du côté opposé à la tête (18), présente une largeur légèrement inférieure à la largeur du corps (17) de la lame, ceci sur une longueur légèrement supérieure à la moitié de la longueur dudit noyau (12).

4. Dispositif selon l'une quelconque des revendications précédentes, **caractérisé en ce que** sur chaque lame (16) les deux trous de fixation (21,22) ont des diamètres légèrement différents pour admettre les tolérances d'assemblage.

5. Dispositif selon l'une quelconque des revendications précédentes, **caractérisé en ce que** ledit noyau (12) comporte axialement un alésage (15) constituant un élargissement central de ladite ouverture rectangulaire (14).

## Patentansprüche

1. Vorrichtung zum Verbinden des Kerns des inneren Ankers eines elastischen Gelenks mit einem Außenteil, wobei dieser Kern außerdem mit einem äußeren Anker über eine Masse aus elastischem Material verbunden ist, **dadurch gekennzeichnet, dass** der Kern (12) durch eine dicke Röhre gebildet wird, die in der Mitte eine rechteckige und enge Durchgangsöffnung (14) aufweist, und dass die Vorrichtung zwei Verbindungszungen (16) aufweist, die jeweils Folgendes beinhalten:
- einen Körper (17) mit konstanter Breite, der in die Öffnung (14) des Kerns gemäß dieser Breite eingepresst werden kann, und zwar entlang der langen Seite des rechteckigen Querschnitts dieser Öffnung;
- ein Kopfende (18), das geringfügig breiter ist als der Körper (17) und gegen das entsprechende Ende des Kerns (12) anliegen kann, wenn der Körper (17) in der rechteckigen Öffnung (14) des Kerns im Eingriff ist, wobei die Zunge (16) dann aus dessen anderem Ende hervorsteht; und
- eine Befestigungsöffnung (21, 22) in der Nähe jeweils eines Endes der Zunge, nämlich eine Öffnung (21) im Kopf (18) und eine (22) in Richtung des gegenüberliegenden Endes, wobei die Öffnung (21) im Kopf einer der Zungen (16) der Öffnung (22) im gegenüberliegenden Ende der anderen Zunge (16) überlagert ist, wenn die beiden Zungen in der rechteckigen Öffnung (14) des Kerns im Eingriff sind, während sie einander überlagert sind mit ihrem spatenförmigen Kopf.

2. Vorrichtung nach Anspruch 1, **dadurch gekennzeichnet, dass** die beiden Zungen (16) identisch sind.

3. Vorrichtung nach Anspruch 1 oder 2, **dadurch gekennzeichnet, dass** der Endbereich (19) jeder Zunge (16) auf der dem Kopf (18) gegenüberliegenden Seite eine Breite aufweist, die geringfügig kleiner ist als die Breite des Körpers (17) der Zunge, und zwar über eine Länge hinweg, die geringfügig größer ist als die Hälfte der Länge des Kerns (12).

4. Vorrichtung nach einem der vorangehenden Ansprüche, **dadurch gekennzeichnet, dass** auf jeder Zunge (16) die beiden Befestigungsöffnungen (21, 22) geringfügig unterschiedliche Durchmesser haben, um Montagetoleranzen zuzulassen.

5. Vorrichtung nach einem der vorangehenden Ansprüche, **dadurch gekennzeichnet, dass** der Kern axial eine Bohrung (15) aufweist, die eine zentrale Verbreiterung der rechteckigen Öffnung (14) bildet.

## Claims

1. A device for connecting, to an external part, an inner armature core of a flexible joint, this core being moreover connected to an outer armature by a mass of flexible material, **characterised in that** the said core (12) is constituted by a thick tube comprising centrally a through, rectangular and narrow opening (14), and **in that** the said device comprises two connection strips (16) each having:
- a body (17) of constant width able to engage with close fitting, along this width, in the said opening (14) in the core, along the long side of the rectangular section of this opening;
- an end head (18) approximately wider than the said body (17) and able to rest against the corresponding end of the said core (12) when the body (17) is engaged in the said rectangular opening (14) of this core, the said strip (16) then protruding at its other end; and
- a fixing hole (21, 22) near each of the two ends of the strip, namely one (21) in its head (18) and the other (22) towards the opposite end, the head hole (21) of one of the strips (16) lying over the hole (22) of the said opposite end of the other strip (16) when these two strips are engaged by being superposed head to foot in the said rectangular opening (14) of the core.

2. A device according to claim 1, **characterised in that** the two strips (16) are identical.

3. A device according to claim 1 or 2, **characterised in that** the terminal part (19) of each strip (16), on the side opposite the head (18), is slightly less wide than the body (17) of the strip, this over a length slightly more than half the length of the said core (12).

4. A device according to any one of the previous claims, **characterised in that** on each strip (16) the two fixing holes (21, 22) have slightly different diameters so as to allow for assembly tolerances.

5. A device according to any one of the previous claims, **characterised in that** the said core (12) comprises axially a bore (15) constituting a central widening of the said rectangular opening (14).
